# EUROPEAN PATENT SPECIFICATION

(11) **EP 2 756 967 B1**
(45) Date of publication and mention of the grant of the patent: **11.05.2016**
(21) Application number: 11872287.5
(22) Date of filing: 15.11.2011
(51) Int. Cl.: B60C 23/04, H01R 13/502, H01R 13/02, H01R 13/00, H02J 7/00, H01R 103/00, H01R 24/58, H01R 31/06

(54) **TIRE PRESSURE MONITORING SYSTEM AND MONITORING ASSEMBLY FOR VEHICLE-MOUNTED POWER-DRAWING INTERFACE**
REIFENDRUCK-ÜBERWACHUNGSSYSTEM UND ÜBERWACHUNGSANORDNUNG FÜR EINE FAHRZEUGMONTIERTE STROMENTNAHMESCHNITTSTELLE
SYSTÈME DE SURVEILLANCE DE PRESSION DE GONFLAGE DE PNEU ET ENSEMBLE DE SURVEILLANCE POUR INTERFACE D'APPEL D'ÉNERGIE MONTÉE SUR VÉHICULE

(30) Priority: 13.09.2011 CN 201110270132
(43) Date of publication of application: 23.07.2014
(73) Proprietor: Steelmate Co., Ltd., Zhongshan, Guangdong 528425 (CN)
(72) Inventor: LI, Zhitao, Zhongshan Guangdong 528425 (CN)
(74) Representative: Gulde & Partner
(86) International application number: PCT/CN2011/082234
(87) International publication number: WO 2013/037163

(56) References cited:
- CN-A- 1 785 700
- CN-A- 102 361 154
- CN-B- 101 474 973
- CN-Y- 2 750 940
- DE-U1-202011 001 597
- US-A- 4 682 139
- US-A1- 2004 092 156
- US-A1- 2006 125 613
- US-B1- 6 394 851
- US-B1- 6 868 718
- US-B1- 7 024 928

## Description

### FIELD OF THE INVENTION

The present invention relates to an onboard equipment connective construction and more particularly, relates to a monitoring component of an onboard power-taking port and a tire pressure monitoring system employing the onboard equipment connective construction.

### BACKGROUND OF THE INVENTION

Minimization of onboard equipment has direct influence on commercial promotion of the product. A tire pressure monitoring unit, which is small-sized, easy to be connected, has various functions, and is equipped with a display, will of course bring more successful commercial value, compared to another product which uses a large sized display and occupies large space.

Reference is made to Chinese Patent Application No. 101474973 disclosing an onboard equipment connective structure and an onboard display which partially fulfilled the above purposes. The improvement of it lies in external devices such as display are integrated by using a specific connective structure into a power-taking construction connected with a power-taking port located inside the cab. As such, these devices such as display can obtain electric power directly from the power-taking port inside the cab and perform other control functions, thereby realizing the same object without causing damage to cable connection layout.

A car power-taking port is also referred as to a car cigar lighter. The car cigar lighter defines internally a cylindrical room at the bottom of which a first connective electrode is disposed and at a cylindrical wall of which a second connective electrode of a power supply is disposed. A power-taking device is inserted into the cylindrical room and power-taking is performed by connecting of the device with both the first and second connective electrodes.

The dimension of a power-taking port is specified by industry standard. Accordingly, conventional idea is to make the power-taking device itself perform power obtaining function. For example, as illustrated in Chinese Patent Application No. CN101474973, the entire internal and external space occupied by the power-taking device are intended only for obtaining electric power, and no other function can be realized. As a result, external devices such as display and control circuits for these devices must be positioned on the outside of the power-taking device. Consequently, the whole product can't be reduced in size completely.

It is critical to know how to minimize the size of the equipment, get rid of conventional idea, and reasonably utilize space. To reasonably utilize space, every component inside the equipment should be re-arranged more effectively.

For equipment with control function such as tire pressure monitoring unit which receives signal from a tire pressure gauge, transforms the signal into readable information and then output the same information, to guarantee reliability of signal receiving and transmitting, the antenna should be distributed reasonably. Higher requirement regarding hiding and arrangement of the antenna will be presented once the equipments are required to be further reduced in dimension.

In the application US 2006/0125613 A1 a tire pressure detector and alarm system is disclosed to include a battery-operated tire pressure detector installed in the air valve of a vehicle wheel and controlled by a control switch formed of a metal probe and a diaphragm held metal conductor member for providing a radio alarm signal when tire pressure low, a locking device installed in the air valve of the vehicle wheel to lock the tire pressure detector to the air valve, and a receiver and alarm unit directly connectable to the socket for cigarette lighter for receiving radio alarm signal from the tire pressure detector and display the signal.

The application US 2004/092156 A1 disclosed a power supply apparatus for coupling electricity between a power source and a device. The apparatus including a body having at least one aperture and at least one electrical contact configured to mate with the power source; at least one light source arranged within the body; and at least one light transmitting cover. The cover configured to cover the at least one aperture. The cover having indicia thereon. The at least one light source arranged to radiate through the at least one aperture and backlight the indicia.

Furthermore the application US 4 682 139 A disclosed an electrical plug which has a spring-loaded contact connecting electrically to a first conducting strip acting as an anode and a second conducting strip acting as a cathode. Both the first and second conducting strips have sharp projections which penetrate into conducting wires to contact the conductor therein. The cathode conducting strip has a resilient ridge projecting therefrom to contact the negative polarity of the electricity system of automobiles, thus keeping the plug from dropping out of the socket.

### SUMMARY OF THE INVENTION

One object of the present invention is to overcome the drawbacks of prior art technology and provide a monitoring component of an onboard power-taking port which is small in size and portable.

Another object of the present invention is to provide a portable tire pressure monitoring system.

To fulfill the above objects, the present invention provides the following technical solution.

State of the art is the monitoring component of an onboard power-taking port known from the document US 2006/0125613 A1. The monitoring component includes a power-taking component disposed inside a power-taking space of the power-taking port and engaged with the power-taking port so as to realize power taking, a control circuit powered by the power coming from the power-taking component, a carrier for carrying the control circuit, and a display unit electrically connected with the control circuit. The control circuit receives an external signal by the antenna and process the external signal so that the signal is provided to the display unit for displaying the same; and the antenna and display unit are disposed at an external end of the power-taking component.

Moreover according to the invention, the power-taking component includes a main body, a first power-taking electrode and a second power-taking electrode; the second power-taking component passes through the main body and then is connected with a second connective electrode of the power-taking port; and the first power-taking electrode passes through the main body and then is connected with a first connective electrode of the power-taking port.

Moreover according to the invention, the main body of the power-taking component includes a cylindrical member and a bottom cap; an internal end of the cylindrical member is connected with the bottom cap; a through hole is defined in a cylindrical wall of the cylindrical member for passing through the second power-taking electrode; and a through hole is defined in the bottom cap at an axial location for passing through the first power-taking electrode.

Furthermore according to the invention, the first power-taking electrode has a retractable construction.

Furthermore according to the invention, the carrier has a second receiving space which is overlapped partially with the power-taking space and partially with the first receiving space.

Preferably the first power-taking electrode of the power-taking component is connected with the first connective electrode of the power-taking port is partially contained inside the second receiving space.

More preferably, a flange is formed on an inner wall of the external end of the power-taking component; the carrier includes at least one circuit board for carrying the control circuit; the circuit board is secured vertically on one surface of a supporting disc, while an opposite surface of the supporting disc holds the display unit thereon; the carrier extends into the first receiving space of the power-taking component, and the supporting disc is located on the flange; and the external end of the power-taking component is assembled with lid having a transparent top surface so as to receive the display unit.

Furthermore preferably, the carrier includes multiple circuit boards; and a gap among these circuit boards defines the second receiving space.

More preferably, a protective cap with an opening is disposed between the supporting disc and lid; and the lid is assembled with the supporting disc so as to enclose the display unit and make a screen of the display unit be visible through the opening.

Preferably to effectively hide the antenna, a circular groove is defined in the external end of the power-taking component along its circumferential direction; and the antenna connected to the control circuit surrounds the circular groove.

Preferably the circular groove has a threaded portion.

Preferably the first power-taking electrode is connected with the control circuit on the carrier through a conductive piece.

Preferably, when the monitoring component is inserted into the power-taking port, the entire axial length of the monitoring component is limited to be no longer than 1.5 times of the axial length of the power-taking port.

Furthermore, when the monitoring component is inserted into the power-taking port, the entire axial length of the monitoring component is limited to be no longer than the axial length of the power-taking port.

A tire pressure monitoring system according to claim 11 provided by the invention includes a monitoring unit and at least one tire pressure gauge used for measuring tire pressure and transmitting signals to the air, wherein the monitoring unit is a monitoring component of an onboard power-taking port according to any one of claims 1-10, and the control circuit of the monitoring component receives the signal transmitted by the tire pressure gauge through an antenna connected to the control circuit.

Compared with prior art, the present invention has the following advantages.

Firstly, the control circuit and its carrier are integrated into the first receiving space of the power-taking component. In addition, the antenna and display unit are located at the external end of the power-taking component. As such, the first receiving space is used more effectively, and the entire monitoring component is further reduced in size. For example, the length of the component is basically limited to be no larger than 1.5 times of the length of the power-taking port. Alternatively, the length of the component may be further limited to be the length of the port. As the size is significantly reduced, the monitoring component of the invention becomes more convenient for carrying, more easy to mount and therefore, more favorable.

Secondly, the monitoring component of the invention is compact substantially. The first receiving space of the power-taking component is utilized with more effectiveness. In addition, a second receiving space is formed by the carrier and therefore, interference of the second receiving space with the retractable first power-taking electrode is prevented completely.

Thirdly, though the dimension of the monitoring component is further reduced, the antenna may still receive and transmit signals without any mistake and obstacle due to arrangement of the antenna and display unit in the external end of the power-taking component. Furthermore, the display unit is able to display related information intuitively to the passengers, thereby meeting requirement of monitoring. The generality of the present monitoring component is also improved due to reliable signal transmission and receiving of the antenna and accordingly, the monitoring component may find its application in other fields where communication among electronic devices is needed, including but not limited to the tire pressure monitoring system.

Finally, the tire pressure monitoring system constructed of the monitoring component of the invention is able to maintain its inherent function; display monitoring information more conveniently, is lightweight and thus favorable as well.

### BRIEF DESCRIPTION OF THE DRAWINGS

Figure 1 shows a perspective view of a monitoring component of an onboard power-taking port according to a preferred embodiment of the present invention;
Figure 2 shows a perspective exploded view of the monitoring component of the onboard power-taking port according to a preferred embodiment of the present invention;
Figure 3 shows a cross-sectional view of the monitoring component of the onboard power-taking port according to a preferred embodiment of the present invention;
Figure 4 shows an exploded perspective view of a first power-taking electrode of the monitoring component of the onboard power-taking port according to a preferred embodiment of the present invention; and
Figure 5 shows a cross-sectional view of the monitoring component or the onboard power-taking port according to a preferred embodiment of the present invention, wherein top portion thereof has been removed to show internal construction of a power-taking component.

### DETAILED DESCRIPTION OF THE INVENTION

The various embodiments of the invention will be described in detail in conjunction with the accompanying drawings.

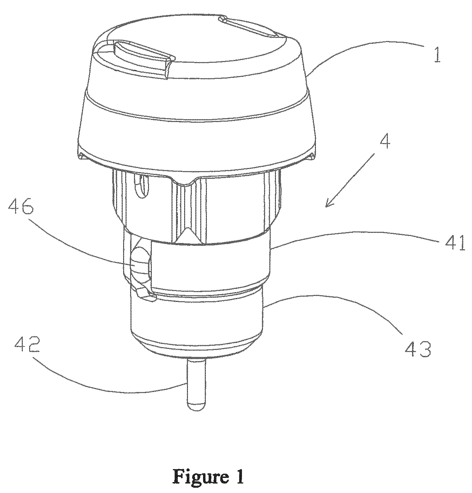

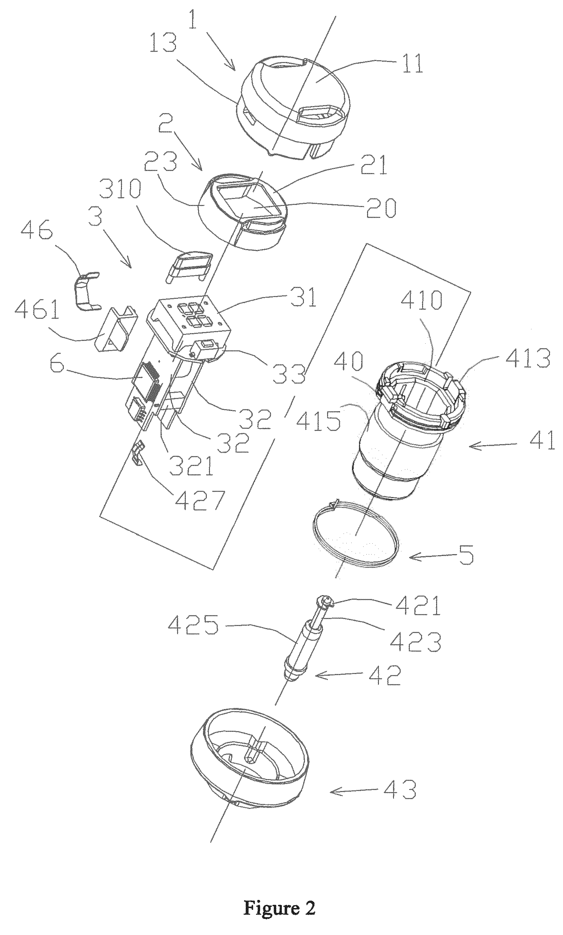

Reference is made to figures 1 and 2. In a preferred embodiment of the invention, the monitoring component of the onboard power-taking port includes a power-taking component 4, a carrier 32, a control circuit 6, an antenna 5 and a display unit 31.

The power-taking component 4 is mounted together with a car power-taking port (also referred as to cigar lighter, not shown in the drawings). According to industry standard, the car power-taking port has a cylindrical power-taking space, on a cylindrical wall of which a metal member used as a second connective component is disposed, while in an axial interior portion of which another metal member used as a first connective component is disposed. Therefore, the power-taking component 4 is designed to be inserted suitably into the car power-taking port and maintain reliable contact with both of the first and second connective components respectively such that power is supplied to the power-taking component. Power-taking is performed by inserting the power-taking component 4 into the car power-taking port. Accordingly, one end which is inserted into the power-taking port, of the power-taking component 4 is defined as an internal end, while the opposite end thereof is defined as an outer end.

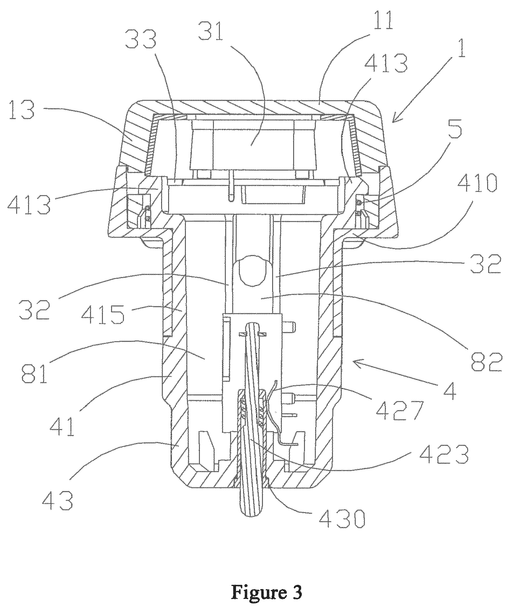

For the power-taking component 4 to meet the above requirements, reference is also made to figures 2 and 3. In a preferred embodiment of the invention, the power-taking component 4 is designed to have a main body (41, 43), a first power-taking electrode 42 and a second power-taking electrode 46. The main body (41, 43) is composed of a cylindrical member 41 and a bottom cap 43 both of which are assembled together. The bottom cap 43 and cylindrical member 41 may be assembled together by means of screw, snap fit, and the like. As such, a first receiving space is formed by assembling of the cylindrical member 41 and bottom cap 43. In addition, the first receiving space is also part of the power-taking space of the power-taking port. In the present invention, the first receiving space 81 also receives other components of the invention, in addition to the first power-taking electrode 42 and second power-taking electrode 46.

A through hole 430 is defined at an axial location of the bottom cap 43. The through hole 430 serves to contain the first power-taking electrode 42 such that the electrode 42 will pass the hole 430 and then be connected electrically and physically with the first connective member of the power-taking port. The detailed construction of the first power-taking electrode 42 and assembling relationship of it with the bottom cap 43 are discussed hereinafter. As shown in figure 3, a lateral hole is defined at a cylindrical wall of the cylindrical member 41 through which the second power-taking electrode 46 passes in order that the electrode 46 will be connected with a second connective member of the power-taking port electrically and physically. The second power-taking electrode 46 is positioned on a locating member 461. In addition, the locating member 461 is fixed to an inner wall of the power-taking component 4 so that the second power-taking electrode 46 is held on place. By this way, the second power-taking electrode 46 is prevented from dropping into interior of the first receiving space 81.

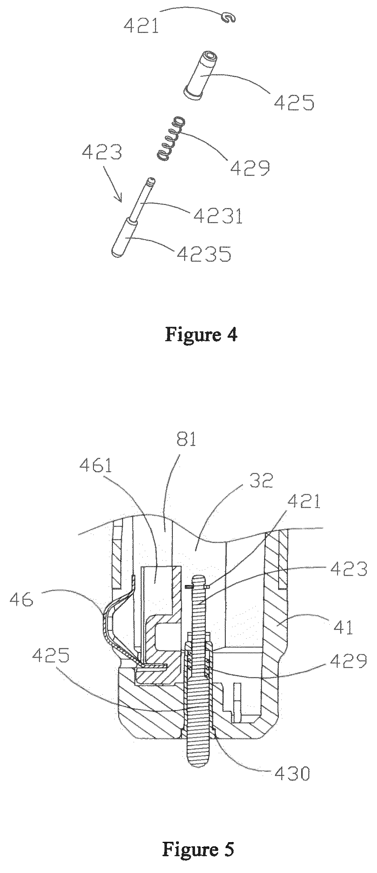

Reference is made to figures 2-4. The first power-taking electrode 42 is retractable and includes a sleeve 425, a cylindrical spring 429, a contacting member 423 and a circlip 421. The contacting member 423 includes a first portion 4235 and a second portion 4231 having smaller diameter than the first portion 4235. A circular groove is formed at a distal end of the second portion 4231. Moreover, the outer diameter of the second portion 4231 is smaller than the inner diameter of the cylindrical spring 429. One end of the sleeve 425 is opened and the other end thereof has a through hole defined therein. The second portion 4231 is inserted into the spring 429. The second portion 4231 of the contacting member 423 together with the spring 429 is placed into the sleeve 425. Part of the second portion 4231 runs outside the through hole of the sleeve 425. In addition, the circlip 421 is fitted into the circular groove of the second portion 4231, thus finishing assembling of the first power-taking electrode 42. It is apparent that the sleeve 425 of the first power-taking electrode 42 is secured on the bottom cap 43 such that one end of the contacting member 423 is exposed, while the other end thereof comes into the first receiving space 81. In this case, the contacting member 423 is capable of retract or extend when an axial force is applied thereon. When the force is applied axially toward the external end of the member 423, the member 423 will urge the cylindrical spring 429 such that the spring 429 is compressed into the first receiving space 81. When the force disappears, the contacting member 423 will return its original position under the resiliency of the spring 429. The monitoring component of the present invention can be adapted to power-taking ports with power-taking space of different depth due to retractable configuration.

Therefore, according to a preferred embodiment of the invention, when designing the construction of the first receiving space 81, we should consider providing a second receiving space 82 for receiving the contacting member 423. The monitoring component of the onboard power-taking port of the invention is able to adapt to various power-taking ports with different depth due to retractable configuration of the first power-taking electrode 42. However in another embodiment (not shown) of the invention, to adapt different depth of the power-taking ports, the length of the first power-taking electrode 42 is set to be constant. In addition, it is unnecessary for the electrode 42 to extend into the first receiving space 81. In this situation, there is no need for providing a second receiving space 82.

Referring to figures 2, 3 and 5, to further utilize the first receiving space 81 with higher effectiveness, two circuit boards 32 are used as the carrier 32 for mounting the control circuit 6 of the invention.

As indicated by name, the control circuit 6 functions to perform signal processing and supply the processed signal to the display unit 31 to display the signal. A typical application of the monitoring component of the onboard power-taking port of the invention is configured as part of a tire pressure monitoring system (not shown). That is, take the monitoring component as a monitoring unit of the tire pressure monitoring system. Signal representing tire pressure and/or tire temperature transmitted by the tire pressure gauge of the tire pressure monitoring system, is received by the control circuit 6 via the antenna 5, decoded, calculated, transformed into signal to be outputted by the display unit 31, and then is displayed by the unit 31 connected with the control circuit 6, thus realizing tire pressure monitoring. Here, to ensure that the antenna 5 can receive and transmit signal without malfunction, the display unit 31 should be able to display information without any obstacle. Consequently, it is not wise to arrange the display unit 31 close to the internal end of the power-taking component 4. The rest components of the control circuit 6 can be totally secured onto the two circuit boards 32. Of course, the number of the circuit boards 32 may be changed based on complexity of the control circuit 6. For example, one, three or four or even more circuit boards 32 may be provided as long as there is no influence on space utilization.

The monitoring component of the power-taking port of the invention may also have other applications such as for monitoring temperature inside the car, automobile gas and the like. Similar to the above typical application, in these applications, the antenna 5, control circuit 6 and display unit 31 may also be included and have the similar arrangement. Apparently, the monitoring component of the power-taking port of the invention has wide application.

In the present invention, the two circuit boards 32 contain part of the control circuit 6 respectively. The two circuit boards 32 are parallel with each other and are vertically disposed on the same plane of a supporting disc 33. The two circuit boards 32 are also supporter by a connective member 321 such that balanced stable relationship is maintained between the two boards 32. The display unit 31 is secured on the other plane of the supporting disc 33. An indicator lamp 310 may also be provided on an upper surface of the supporting disc 33. Obviously, using the two planes of the supporting disc 33, the display unit 31, control circuit 6 and carrier 32 constitute a construction body 3. The supporting disc 33 may function as a divider of the construction body 3. In this case, the control circuit 6 and its carrier 32 are disposed into the first receiving space 81, whereas the display unit 31 is disposed at the external end of the power-taking component 4.

Reference is further made to figures 2, 3 and 5. To assemble the construction body 3 and power-taking component 4 together, an extension portion 413 with larger diameter is formed on the external end of the cylindrical member 41 of the power-taking component 4. A circular flange 410 is formed on the inner wall of the cylindrical member 41 at location between the extension portion 413 and a non-extension portion 415. Alternatively, the flange 410 may also be formed by naturally extending outwardly the diameter of the extension portion 413. The supporting disc 33 of the construction body 3 is located on the flange 410 directly or by an intermediate member. As such, the supporting disc 33 is held on the power-taking component 4. Namely, the supporting disc 33 may be regarded as the divider of the construction body 3. The control circuit 6 and circuit boards 32 are contained in the first receiving space 81, and it is ensured that the screen of the display unit 31 is exposed and can display information.

It can be seen from the present preferred embodiment that the specific location of the flange 410 on the cylindrical member 41 may have influence on the entire length of the monitoring component and the depth of the entire first receiving space 81. Based on the design illustrated in this preferred embodiment, the display unit 31 may have small thickness, and as such, when the monitoring component is inserted into the car power-taking port, the entire axial length of the monitoring component may be limited to be no longer than 1.5 times of the axial length of the power-taking space of the port. In another embodiment of the invention not shown, the length of the two circuit boards 32 is further shortened. In addition, the flange 410 is configured to be closer to the internal end of the power-taking component 4. Accordingly, the axial length of the entire monitoring component can be further limited to be no longer than the axial length of the power-taking space of the car power-taking port when the monitoring component is inserted into the port.

As described above, the spatial relationship and assembling relationship between the construction body 3 and power-taking component 4 is determined. As shown in figures 2 and 3, to realize connection of the first and second power-taking electrodes 42, 46 with the control circuit 6 so as to obtain electricity, the first power-taking electrode 42 is coupled to the control circuit 6 on the circuit board 32 via a first conductive piece 427. Similarly, the second power-taking electrode 46 is coupled to the control circuit 6 of the circuit board 32. It can be perceived that various other means may be used to realize connection of the first power-taking electrode 42 or second power-taking electrode 46. As such, as the respective distance between the electrodes 42, 46 and circuit board 32 is short, there may be flexible designs for the first and second electrodes 42, 46, and these designs should not be limited to the embodiments.

As illustrated above, in the present preferred embodiment, the first power-taking electrode 42 is designed to be retractable. Therefore, it is considered to provide a second receiving space 82 for accommodating the electrode 42. Based on the aforementioned construction body 3, in case that the carrier 32 is constructed of only one circuit board 32, the second receiving space 82 into which the retractable first power-taking electrode 42 is contained, is thus defined by biasing the circuit board 32 away from the axis of the entire cylindrical member 41. However, in case that the circuit board 32 is configured to have more components, these circuit boards 32 should be arranged around the supporting disc 33 and biased away from the axis. In this way, the second receiving space 82 is defined by a gap formed among these circuit boards 32 with the axis as the center of the gap. Apparently, the second receiving space 82 is part of the first receiving space 81 of the power-taking component 4, and is also part of the power-taking space of the power-taking port. In other words, the above three spaces overlap partially with each other.

Reference is further made to figures 2, 3 and 5. To protect the display unit 31 and according to a preferred embodiment of the invention, there is provided a protective cap 2 including a skirt portion 23 and a crown portion 21. An opening 20 of which the shape is similar to that of the unit 31 is defined in the crown portion 21. The protective cap 2 is secured to the supporting disc 33 by means of snap-fitting or screw. The screen of the display unit 31 is visible through the opening 20 after being assembled.

To reasonably arrange the antenna 5 so as to obtain the antenna mounting structure of the invention and make the antenna 5 receive and transmit signal with higher electrical performance, the antenna 5 should have a suitable length. In this preferred embodiment, a circular groove 40 is provided on an outer wall of the extension portion 413 of the external end of the cylindrical member 41. Furthermore, to maintain the length of the groove, the groove 40 is designed to have threaded portion. Correspondingly, the antenna 5 connected with the control circuit 6 is also configured to have threaded portion. Moreover, the antenna 5 is inserted into the circular groove 40 for hiding purposes. The antenna 5 having this design brings better impedance match performance and stable signal receiving/transmitting, thus ensure reliable interconnection among the monitoring component and other related electronic devices. Therefore, generality of the monitoring component of the invention is enhanced significantly. In other embodiments of the invention not shown, the circular groove 40 may also be defined in an inner wall of the extension portion 413 so long as it is able to receive external signal. Alternatively, the circular groove 40 may also be defined in other locations as will be discussed below.

To further ensure assembling reliability of the entire construction body 3 and power-taking component 4 and according to a preferred embodiment, a lid 1 is provided which includes a crown portion 11 made of transparent material. In other words, the lid 1 has a transparent top surface through which the light from the display unit 31 can penetrate and then be seen. An assembling structure is formed between an end surface of the extension portion 413 of the external end of the cylindrical member 41 and skirt portion of the lid 1. This assembling structure may be snap-fitting or screw structure. The lid 1 can be assembled with the extension portion 413 of the member 41 by above snap-fitting or screw manner, thus finishing the assembling of the entire monitoring component. Alternatively, to realize assembling between the lid 1 and member 41, various other manners may be used.

Clearly, the lid 1 and protective cap 2 constitute cooperatively an enclosure member for covering and protecting the display unit 31. It is noted that the specific structure of the enclosure member is not limited to the combination of the lid 1 and cap 2. For example, the enclosure member may only include a lid 1. Or, the lid 1 may be formed integrally with the protective cap. In a summary, the enclosure member may be designed with flexibility.

In an embodiment of the invention not shown, the axial length of the entire monitoring component is less than the axial length of the power-taking space of the car power-taking port. In this situation, there is no need to widen the diameter of the cylindrical member 41. Limited by the inner diameter of the power-taking space, it is suitable to position the threaded antenna 5 into the threaded circular groove predefined in the inner wall or outer wall of the skirt portion 13 of the lid 1. Selectively, the antenna 5 may also be disposed into the threaded circular groove predefined in the outer wall or inner wall of the skirt portion of the protective cap 2.

Summarily, the monitoring component of an onboard power-taking port provided by the invention has the advantages of compact design, stable signal transmitting/receiving, and enhanced generality. In addition, the above antenna mounting structure may find its application in many fields where readable monitoring is needed such as tire pressure monitoring system.

## Claims

1. A monitoring component of an onboard power-taking port, comprising a power-taking component (4) disposed inside a power-taking space of the power-taking port and engaged with the power-taking port so as to realize power taking, a control circuit (6) powered by the power coming from the power-taking component (4), a carrier (32) for carrying the control circuit (6), and a display unit (31) electrically connected with the control circuit (6), the control circuit (6) receives an external signal by an antenna and process the external signal so that the signal is provided to the display unit (31) for displaying the same; and the antenna and display unit (31) are disposed at an external end of the power-taking component (4); **characterized in, that** a main body (41, 43) of the power-taking component (4) includes a cylindrical member (41) and a bottom cap (43); an internal end of the cylindrical member (41) is connected with the bottom cap (43); a through hole (430) is defined in a cylindrical wall of the cylindrical member (41) for passing through a second power-taking electrode (46); and a through hole (430) is defined in the bottom cap (43) at an axial location for passing through a first power-taking electrode (42); the first power-taking electrode (42) has a retractable construction; wherein the carrier (32) has a second receiving space which is overlapped partially with a power-taking space and partially with the first receiving space; and the first power-taking electrode (42) of the power-taking component (4) connected with a first connective electrode of the power-taking port is partially contained inside the second receiving space.

2. The monitoring component of an onboard power-taking port according to claim 1, wherein the power-taking component (4) includes the main body (41, 43), the first power-taking electrode (42) and the second power-taking electrode (46); the second electrode (46) passes through the main body (41, 43) and then is connected with a second connective electrode of the power-taking port; and the first power-taking electrode (42) passes through the main body (41, 43) and then is connected with a first connective electrode of the power-taking port.

3. The monitoring component of an onboard power-taking port according to claim 1, wherein a flange (410) is formed on an inner wall of the external end of the power-taking component (4); the carrier (32) includes at least one circuit board for carrying the control circuit (6); the circuit board is secured vertically on one surface of a supporting disc (33), while an opposite surface of the supporting disc (33) holds the display unit (31) thereon; the carrier (32) extends into the first receiving space of the power-taking component (4), and the supporting disc (33) is located on the flange (410); and the external end of the power-taking component (4) is assembled with a lid (1) having a transparent top surface so as to receive the display unit (31).

4. The monitoring component of an onboard power-taking port according to claim 3, wherein the carrier (32) includes multiple circuit boards; and a gap among these circuit boards defines the second receiving space.

5. The monitoring component of an onboard power-taking port according to claim 3, wherein a protective cap with an opening is disposed between the supporting disc (33) and the lid (1); and the lid (1) is assembled with the supporting disc (33) so as to enclose the display unit (31) and make a screen of the display unit (31) be visible through the opening.

6. The monitoring component of an onboard power-taking port according to claim 1, wherein a circular groove (40) is defined in the external end of the power-taking component (4) along its circumferential direction; and the antenna connected to the control circuit (6) surrounds the circular groove (40).

7. The monitoring component of an onboard power-taking port according to claim 6, wherein the circular groove (40) has a threaded portion.

8. The monitoring component of an onboard power-taking port according to claim 1, wherein the first power-taking electrode (42) is connected with the control circuit (6) on the carrier (32) through a conductive piece (427).

9. The monitoring component of an onboard power-taking port according to claim 1, wherein when the monitoring component is inserted into the power-taking port, the entire axial length of the monitoring component is limited to be no longer than 1.5 times of the axial length of the power-taking port.

10. The monitoring component of an onboard power-taking port according to claim 1, wherein when the monitoring component is inserted into the power-taking port, the entire axial length of the monitoring component is limited to be no longer than the axial length of the power-taking port.

11. A tire pressure monitoring system, comprising a monitoring unit and at least one tire pressure gauge used for measuring tire pressure and transmitting signals to the air, wherein the monitoring unit is a monitoring component of an onboard power-taking port according to any one of claims 1-10, and the control circuit (6) of the monitoring component receives the signal transmitted by the tire pressure gauge through an antenna connected to the control circuit (6).

## Patentansprüche

1. Überwachungskomponente für eine fahrzeugmontierte Stromentnahmeschnittstelle, umfassend eine Stromentnahnekomponente (4), die im Inneren eines Stromentnahmeraums der Stromentnahtneschnittsteile angeordnet ist und mit der Stromentnahmesclmittstelle in Eingriff steht, um eine Stromentnahme zu realisieren, eine Steuerschaltung (6), die durch den Strom, der von der Stromentnahmekomponente (4) kommt, mit Energie versorgt wird, einen Träger (32) zum Tragen der Steuerschaltung (6) und eine Anzeigeeinheit (31), die elektrisch mit der Steuerschaltung (6) verbunden ist, wobei die Steuerschaltung (6) über eine Antenne ein externes Signal empfängt und das externe Signal verarbeitet, so dass das Signal zum Anzeigen desselben der Anzeigeeinheit (31) bereitgestellt wird; und die Antenne und die Anzeigeeinheit (31) an einem externen Ende der Stromentnahmekomponente (4) angeordnet sind; **dadurch gekennzeichnet, dass** ein Hauptkörper (41, 43) der Stromentnahmekomponente (4) ein zylindrisches Element (41) und eine Bodenkappe (43) umfasst; ein internes Ende des zylindrischen Elements (41) mit der Bodenkappe (43) verbunden ist; in einer zylindrischen Wand des zylindrischen Elements (41) ein Durchgangsloch (430) zum Hindurchführen einer zweiten Stromentnahmeelektrode (46) definiert ist; und in der Bodenkappe (43) an einer axialen Position ein Durchgangsloch (430) zum Hindurchführen einer ersten Stromentnahzneelektrade (42) definiert ist; die erste Stromentnahmeelektrode (42) eine zurückziehbare Konstruktion aufweist; wobei der Träger (32) einen zweiten Aufnahmeraum aufweist, der teilweise den Stromentnahmeraum und teilweise einen ersten Aufnahmeraum überlappt; und die erste Stromentnahmeelektrode (42) der Stromentnahmekomponente (4), die mit einer ersten Verbindungselektrode der Stromentnahmeschnittstelle verbunden ist, teilweise im Inneren des zweiten Aufnahmeraums enthalten ist.

2. Überwachungskomponente für eine fahrzeugmontierte Stromentnahmeschnittstelle nach Anspruch 1, wobei die Stromentnahmekomponente (4) den Hauptkörper (41, 43), die erste Stromentnahmeelektrode (42) und die zweite Stromentnahmeelektrode (46) umfasst; die zweite Stromentnahmeelektrode (46) durch den Hauptkörper (41, 43) hindurch verläuft und dann mit einer zweiten Verbindungselektrode der Stromentnahmeschnittstelle verbunden ist; und die erste Stromentnahmeelektrode (42) durch den Hauptkörper (41, 43) hindurch verläuft und dann mit einer ersten Verbindungselektrode der Stromentnahmeschnittstelle verbunden ist.

3. Überwachungskomponente für eine fahrzeugmontierte Stromentnahmeschnittstelle nach Anspruch 1, wobei an einer Innenwand des externen Endes der Stromentnahmekomponente (4) ein Flansch (410) ausgebildet ist; der Träger (32) wenigstens eine Leiterplatte zum Tragen der Steuerschaltung (6) umfasst; die Leiterplatte vertikal an einer Oberfläche einer Tragscheibe (33) befestigt ist, während eine gegenüberliegende Oberfläche der Tragscheibe (33) die Anzeigeeinheit (31) daraufhält; sich der Träger (32) in den ersten Aufnahmeraum der Stromentnahmekomponente (4) hinein erstreckt und sich die Tragscheibe (33) an dem Flansch (410) befindet; und das externe Ende der Stromentnahmekomponente (4) mit einem Deckel (1) zusammengebaut ist, der eine transparente obere Oberfläche aufweist, um die Anzeigeeinheit (31) aufzunehmen.

4. Überwachungskomponente für eine fahrzeugmontierte Stromentnahmeschnittstelle nach Anspruch 3, wobei der Träger (32) mehrere Leiterplatten umfasst; und ein Zwischenraum zwischen diesen Leiterplatten den zweiten Aufnahmeraum definiert.

5. Überwachungskomponente für eine fahrzeugmontierte Stromentnahmeschnittstelle nach Anspruch 3, wobei zwischen der Tragscheibe (33) und dem Deckel (1) eine Schutzkappe mit einer Öffnung angeordnet ist; und der Deckel (1) mit der Tragscheibe (33) zusammengebaut ist, um die Anzeigeeinheit (31) zu umschließen und einen Bildschirm der Anzeigeeinheit (31) durch die Öffnung hindurch sichtbar zu machen.

6. Überwachungskomponente für eine fahrzeugmontierte Stromentnahmeschnittstelle nach Anspruch 1, wobei in dem externen Ende der Stromentnahmekomponente (4) entlang seiner Umfangsrichtung eine kreisförmige Nut (40) definiert ist; und die Antenne, die mit der Steuerschaltung (6) verbunden ist, die kreisförmige Nut (40) umgibt.

7. Überwachungskomponente für eine fahrzeugmontierte Stromeninahmeschnittstelle nach Anspruch 6, wobei die kreisförmige Nut (40) einen mit Gewinde versehenen Abschnitt aufweist.

8. Übervvaclxurzgskoznhozzente für eine fahrzeugmontierte Stron xentnahnxesclxnittstelle nach Anspruch 1, wobei die erste Stromentnahmeelektrode (42) über ein leitfähiges Teil (427) mit der Steuerschaltung (6) auf dem Träger (32) verbunden ist.

9. Überwachungskomponente für eine fahrzeugmontierte Stromentnahmeschnittstelle nach Anspruch 1, wobei, wenn die Überwachungskomponente in die Stromentnalimesclxnittstelle eingesetzt ist, die axiale Gesamtlänge der Überwachungskomponente begrenzt ist, um nicht länger zu sein als das 1,5-Fache der axialen Länge der Stromentnahzneschnittstelle.

10. Überwachungskomponente für eine fahrzeugmontierte Stromentnahmeschnittstelle nach Anspruch 1, wobei, wenn die Überwachungskomponente in die Stromentnahmeschnittstelle eingesetzt ist, die axiale Gesamtlänge der Überwachungskomponente begrenzt ist, um nicht länger zu sein als die axiale Länge der Stromentnahmeschnittstelle.

11. Reifendruck-Überwachungssystem, umfassend eine Überwachungseinheit und wenigstens einen Reifendruckmesser, der zum Messen des Reifendrucks und Senden von Signalen an die Luft verwendet wird, wobei die Überwachungseinheit eine Überwachungskomponente für eine fahrzeugmontierte Stromentnahmeschnittstelle nach einem der Ansprüche 1-10 ist und die Steuerschaltung (6) der Überwachungskomponente über eine mit der Steuerschaltung (6) verbundene Antenne das durch den Reifendruckmesser gesendete Signal empfängt.

## Revendications

1. Composant de surveillance d'un port de prise d'énergie embarqué, comprenant un composant de prise d'énergie (4) disposé à l'intérieur d'un espace de prise d'énergie du port de prise d'énergie et en contact avec le port de prise d'énergie de manière à réaliser une prise d'énergie, un circuit de commande (6) alimenté par le courant provenant du composant de prise d'énergie (4), un support (32) destiné à supporter le circuit de commande (6) et une unité d'affichage (31) électriquement reliée au circuit de commande (6), où le circuit de commande (6) reçoit un signal externe via une antenne et traite le signal externe de manière à transmettre le signal l'unité d'affichage (31) pour affichage de celui-ci ; et où l'antenne et l'unité d'affichage (31) sont disposées à une extrémité extérieure du composant de prise d'énergie (4) ; **caractérisé en ce qu'**un corps principal (41, 43) du composant de prise d'énergie (4) présente un élément cylindrique (41) et un capuchon inférieur (43) ; une extrémité intérieure de l'élément cylindrique (41) est reliée au capuchon inférieur (43) ; un trou débouchant (430) est défini dans une paroi cylindrique de l'élément cylindrique (41) pour traverser une deuxième électrode de prise d'énergie (46) ; et un trou débouchant (430) est défini dans le capuchon inférieur (43) à un remplacement axial pour traverser une première électrode de prise d'énergie (42) ; la première électrode de prise d'énergie (42) présente une construction rétractable ; où le support (32) présente un deuxième espace de réception que chevauchent partiellement l'espace de prise d'énergie et partiellement un premier espace de réception ; et la première électrode de prise d'énergie (42) du composant de prise d'énergie (4) reliée à une première électrode de connexion du port de prise d'énergie est partiellement contenue dans le deuxième espace de réception.

2. Composant de surveillance d'un port de prise d'énergie embarqué selon la revendication 1, où le composant de prise d'énergie (4) comprend le corps principal (41, 43), la première électrode de prise d'énergie (42) et la deuxième électrode de prise d'énergie (46) ; la deuxième électrode de prise d'énergie (46) traverse le corps principal (41, 43) avant d'être relié à une deuxième électrode de connexion du port de prise d'énergie ; et la première électrode de prise d'énergie (42) traverse le corps principal (41,43) avant d'être reliée à une première électrode de connexion du port de prise d'énergie.

3. Composant de surveillance d'un port de prise d'énergie embarqué selon la revendication 1, où une flasque (410) est formée sur une paroi intérieure de l'extrémité extérieure du composant de prise d'énergie (4) ; le support (32) comprend au moins une carte de circuit destinée à supporter le circuit de commande (6) ; la carte de circuit est fixée verticalement sur une surface d'un disque de support (33), une surface opposée du disque de support (33) supportant l'unité d'affichage (31); le support (32) s'étend dans le premier espace de réception du composant de prise d'énergie (4), et le disque de support (33) est disposé sur la flasque (410) ; et l'extrémité extérieure du composant de prise d'énergie (4) est raccordée à un couvercle (1) à surface supérieure transparente pour recevoir l'unité d'affichage (31).

4. Composant de surveillance d'un port de prise d'énergie embarqué selon la revendication 3, où le support (32) comprend une pluralité de cartes de circuits ; et où un espacement entre lesdites cartes de circuits définit le deuxième espace de réception.

5. Composant de surveillance d'un port de prise d'énergie embarqué selon la revendication 3, où un capuchon protecteur avec une ouverture est disposé entre le disque de support (33) et le couvercle (1) ; et où le couvercle (1) est raccordé au disque de support (33) pour inclure l'unité d'affichage (31) et rendre un écran de l'unité d'affichage (31) visible par l'ouverture.

6. Composant de surveillance d'un port de prise d'énergie embarqué selon la revendication 1, où une rainure circulaire (40) est définie sur l'extrémité extérieure du composant de prise d'énergie (4) dans la direction circonférentielle de celui-ci ; et où l'antenne reliée au circuit de commande (6) entoure la rainure circulaire (40).

7. Composant de surveillance d'un port de prise d'énergie embarqué selon la revendication 6, où la rainure circulaire (40) comporte une partie filetée.

8. Composant de surveillance d'un port de prise d'énergie embarqué selon la revendication 1, où la première électrode de prise d'énergie (42) est reliée par une pièce conductrice (427) au circuit de commande (6) sur le support (32).

9. Composant de surveillance d'un port de prise d'énergie embarqué selon la revendication 1. où lorsque le composant de surveillance est inséré dans le port de prise d'énergie, la longueur axiale totale du composant de surveillance est limitée de manière à ne pas dépasser 1,5 fois la longueur axiale du port de prise d'énergie.

10. Composant de surveillance d'un port de prise d'énergie embarqué selon la revendication 1, où lorsque le composant de surveillance est inséré dans le port de prise d'énergie, la longueur axiale totale du composant de surveillance est limitée de manière à ne pas dépasser la longueur axiale du port de prise d'énergie.

11. Système de surveillance de pression d'un pneu, comprenant une unité de surveillance et au moins un indicateur de pression de pneu utilisé pour mesurer la pression d'un pneu et transmettre des signaux par voie aérienne, où l'unité de surveillance est un composant de surveillance d'un port de prise d'énergie embarqué selon l'une des revendications 1 à 10, et où le circuit de commande (6) du composant de surveillance reçoit le signal transmis par l'indicateur de pression de pneu via une antenne reliée au circuit de commande (6).
